# EUROPÄISCHE PATENTSCHRIFT

(11) **EP 2 686 611 B1**
(45) Veröffentlichungstag und Bekanntmachung des Hinweises auf die Patenterteilung: **30.09.2015**
(21) Anmeldenummer: 12706514.2
(22) Anmeldetag: 18.02.2012
(51) Int. Cl.: F23G 7/06, B01D 53/70, B09B 3/00

(54) **VERFAHREN UND ANLAGEN ZUR BEHANDLUNG VON KÄLTEMITTEL UND/ODER TREIBMITTEL AUFWEISENDEN FLUIDEN**
METHODS AND SYSTEMS FOR TREATING FLUIDS CONTAINING REFRIGERANT AND/OR PROPELLANT
PROCÉDÉ ET INSTALLATION DE TRAITEMENT DE FLUIDES CONTENANT DES AGENTS FRIGORIGÈNES ET/OU DES AGENTS MOUSSANTS

(30) Priorität: 14.03.2011 DE 102011005522; 14.03.2011 DE 102011005525
(43) Veröffentlichungstag der Anmeldung: 22.01.2014
(73) Patentinhaber: URT Umwelt- und Recyclingtechnik GmbH, 97753 Karlstadt (DE)
(72) Erfinder: BIENER, Bernhard, 97753 Karlstadt (DE)
(74) Vertreter: Stiel, Jürgen
(86) Internationale Anmeldenummer: PCT/EP2012/052820
(87) Internationale Veröffentlichungsnummer: WO 2012/123224

(56) Entgegenhaltungen:
- DE-A1- 4 324 908
- DE-A1-102009 036 649
- JP-A- 2008 121 915
- US-A- 6 110 429
- US-A1- 2004 191 146

## Beschreibung

Die Erfindung betrifft ein Verfahren und eine Anlage zur Behandlung von Kältemittel und/oder Treibmittel aufweisenden Fluiden gemäß den Merkmalen des Anspruches 1 und 21.

Die DE 101 39 236 A1 offenbart ein Verfahren und eine Anlage zum Separieren von Kältemittel aus einem Kältemittel-Öl-Gemisch. Dabei wird zuerst das Kältemittel vom Öl separiert. Das Öl wird in einem Sammelbehälter aufgefangen. Das vom Öl separierte Kältemittel kann einer Verbrennung mit Stützfeuerung zugeführt werden.

Die DE 42 44 966 B4 beschreibt ein System zur Rückgewinnung eines thermischen Isoliermaterials bei der Entsorgung von Kältegeräten.

Durch die DE 42 23 663 A1 ist ein Verfahren zum thermischen Recycling von Alt-PVC mit beigemischten Chlorkohlenwasserstoffen bekannt, wobei einem Brenner eine Quenche nachgeordnet ist.

Aus der Broschüre "Klimaschutz durch Recycling", SCPI, November 2009, ist ein Verfahren zum Recycling von Kühlgeräten bekannt, wobei FCKW aus einem Kühlkreislauf und einer Isolation abgesaugt wird. Dieses abgesaugte FCKW wird in einem Hochtemperaturofen vollständig verbrannt. Die durch die Verbrennung erreichten Emissionsreduktionen werden als Klimaschutzzertifikate verifiziert und können als CO₂ Äquivalente gehandelt werden.

Die EP 1 306 769 A2 bezieht sich auf die Festlegung von CO₂ Äquivalenten mittels Messung und Umrechung von Gasen.

Die DE 10 2009 036 649 A1 offenbart ein Verfahren und eine Vorrichtung zum Entsorgen von Altkühlgeräten. Dabei wird Kältemittel und Treibmittel einem Porenbrenner zugeführt. Ein Abgas des Porenbrenners wird mittels eines Laugenwäschers behandelt, wobei Salzsäure bzw. Flusssäure gebildet wird.

Aus der DE 42 04 603 A1 und der US 2006/0141414 A1 ist es jeweils bekannt, ammoniakhaltiges Gas mit einem Brennstoff unter Zufuhr von Luft zu verbrennen.

Aus der Firmenschrift "Verbrennungsanlagen" der Fa. Currenta, Stand März 2010, ist es bekannt, bei Sonderabfallverbrennungsanlagen einer von oben nach unten durchströmten Quenche zwei von unten nach oben durchströmte Wäscher nachzuschalten.

Die DE 10 2007 039 926 A1 beschreibt ein Verfahren zur Abgasreinigung, bei dem eine Quenche und eine zweite Reinigungsstufe vorgesehen sind. In den Waschflüssigkeiten der Quenche und der zweiten Reinigungsstufe wird ein ph-Wert der Waschflüssigkeit geregelt.

Durch die DE 198 21 470 A1 ist ein Verfahren zur Aufbereitung von Altkältegeräten bekannt, wobei eine Konzentration von brennbarem Treibmittel der Isolationsschicht in der Abluft von Kammern gemessen wird. Diese Abluft kann mittels thermischer Nachverbrennung behandelt werden.

Die DE 101 31 464 B4 offenbart ein Verfahren zur Verbrennung hochhalogenisierter Flüssigkeitsabfälle in einer Abfallverbrennungsanlage. Dabei wird eine Halogenidkonzentration im Abwasser der Rauchgaswäsche bestimmt und eine Halogenwasserstoffmessung im Rauchgas durchgeführt.

Die US 6 110 429 A beschreibt ein Verfahren zur Behandlung von Kältemittel aufweisenden Gasen mittels einer Brennkammer, wobei der Brennkammer Kältemittel aufweisendes Gas aus einer Quelle zugeführt wird.

Die US 2004/191146 A1 beschreibt ein Behandlungsverfahren, wobei die Konzentration von Fluor enthaltenden Gasen stromaufwärts und stromabwärts eines Reaktors gemessen wird.

Die JP 2010 210123 A beschreibt ein Verfahren zur Behandlung von Kältemittel aufweisenden Fluiden mittels einer Brennkammer, wobei ein erstes Fluid als Kältemittel aufweisendes Gas ausgebildet ist, wobei der Brennkammer das Kältemittel aufweisende Gas aus mindestens einer Quelle eines Kühlgerätes zugeführt wird, wobei während einer Betriebsphase dieses Gas verbrannt wird.

Die JP 2008 121915 A beschreibt ein Verfahren zur Behandlung von Kältemittel und Öl aufweisendem Gas, wobei Kältemittel und Treibmittel aufweisendes Öl aus einem Kompressor eines Kühlgerätes entfernt wird, wobei der Behandlungskammer als zweites Fluid dieses Kältemittel und Treibmittel aufweisende Öl zugeführt wird.

Der Erfindung liegt die Aufgabe zugrunde, ein Verfahren und eine Anlage zur Behandlung von Kältemittel und/oder Treibmittel aufweisenden Fluiden zu schaffen.

Die Aufgabe wird erfindungsgemäß durch die Merkmale des Anspruches 1 oder 21 gelöst.

Die mit der Erfindung erzielbaren Vorteile bestehen insbesondere darin, dass eine effiziente, umweltgerechte Behandlung von Kältemittel und/oder Treibmittel aufweisenden Fluiden möglich ist. Dabei ist es möglich, mehrere unterschiedliche Kältemittel und/oder Treibmittel aufweisende Fluide gleichzeitig zu behandeln und umweltgerecht zu entsorgen und/oder zu recyceln.

Insbesondere eignet sich die Erfindung für die Entsorgung und/oder das Recyceln von Kühlgeräten und/oder Kältegeräten, insbesondere von Kühlschränken und/oder Gefriergeräten.

Vorteilhaft ist, dass unterschiedliche Kältemittel und/oder Treibmittel aufweisende Fluide (z.B. Kättemittel, Öl eines Kompressors, Mittel zum Schäumen eines Kunststoffes/Isolierwerkstoffes) bei der Entsorgung von Kühlgeräten gemeinsam behandelt werden können.

Auch ist die Verbrennung von externen Kältemitteln und/oder Treibmitteln möglich, wobei insbesondere eine Dosierung automatisch über eine FCKW und/oder FKW Messung am Eingang einer Brennkammer erfolgt.

Vorteilhafterweise können im Prozess der Kühlgeräteentsorgung anfallende Wasserkondensate (mit Kältemittel und/oder Treibmittel verunreinigt) ebenfalls verbrannt werden.

In vorteilhafter Weise können Kältemittel und/oder Treibmittel direkt von der Erfassungsstelle zur Verbrennung geleitet werden, wobei insbesondere keine Zwischenkondensation notwendig ist. Insbesondere muss das Öl eines Kompressors des Kühlgerätes nicht mehr entgast werden.

Die Behandlung der Fluide ist sehr wirtschaftlich, da durch die Verbrennung von Öl eines Kompressors und/oder brennbarer Kältemittel und/oder Treibmittel der Verbrauch von Brennstoff reduziert werden kann.

Die bei nicht Hindernis freien Brennkammern, insbesondere Porenbrennern auftretenden Nachteile, wie beispielsweise Ablagerung von Staub und/oder Russ treten mit der vorliegenden, vorzugsweise Hindernis freien und/oder Füllkörper freien und/oder mit offener Flamme arbeitenden Brennkammer nicht auf.

Vorteilhaft wird in einer Ausführung der Erfindung bei Behandlung dieser Fluide entstandenes Gas in eine weiterverarbeitbare Dünnsäure und schadstofffreies Reingas aufbereitet.

Die Säurekonzentration des Dünnsäuregemischs (insbesondere Fußsäure- und/oder Salzsäuregemisches) ist in einem Bereich wählbar und kann somit auf die Verwertung abgestimmt werden.

Mit mindestens einem einer Quenche nach geordneten Wäscher wird die Qualität der Anlage verbessert. Insbesondere wird mit einer Füllkörperschüttung in dem mindestens einem weiteren Wäscher eine Oberfläche vergrößert, so dass die Wirkung für Kühlung und/oder Reinigung erhöht wird.

Mit steuerbaren und/oder regelbaren Ventilatoren wird der Strom einer Verbrennungsluft und/oder eines Reingases im Wesentlichen konstant gehalten, so dass die Anlage im Bereich eines optimalen Wirkungsgrades betrieben werden kann.

Ausführungsbeispiele der Erfindung sind in den Zeichnungen dargestellt und werden im Folgenden näher beschrieben.

Es zeigen:

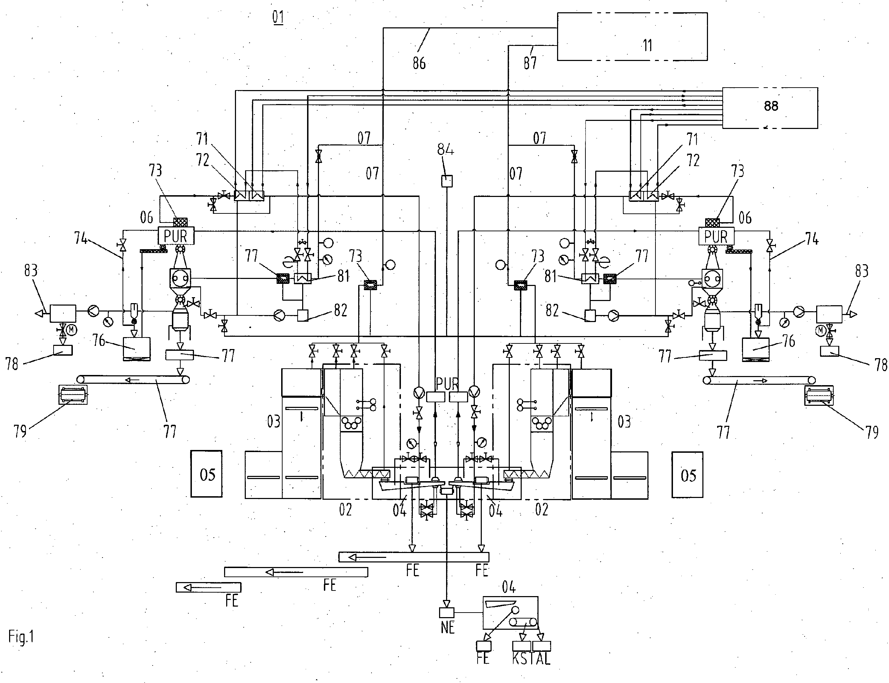

- Fig. 1: Eine schematische Darstellung einer Anlage zum Recyceln und/oder Behandeln und/oder Entsorgen von Gegenständen und/oder Materialien, die mindestens ein FCKW (Fluorchlorkohlenwasserstoff) und/oder FKW (Fluorkohlenwasserstoff) und/oder KW (Pentane und/oder Propane und/oder Butane) aufweisendes Fluid aufweisen;

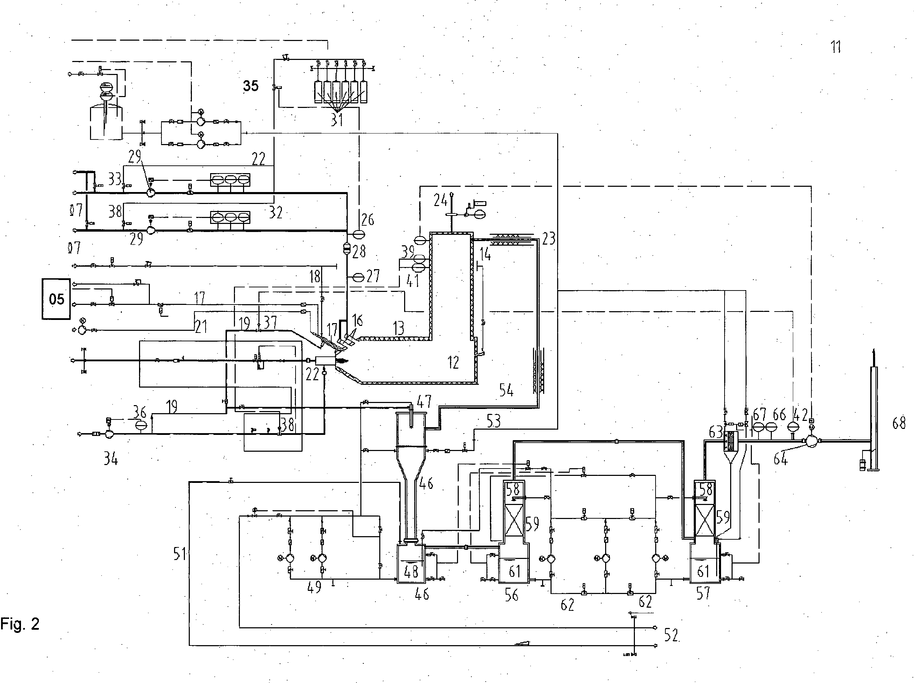

- Fig. 2: eine schematische Darstellung einer Anlage mit einer Brennkammer.

Die Bezeichnungen in den Figuren entsprechen weitgehend DIN 19227.

Bei einem Verfahren und einer Anlage wird mindestens ein Kohlenwasserstoff (insbesondere Halogenkohlenwasserstoffe und/oder Pentane) aufweisendes Fluid behandelt.

Dabei handelt es sich um ein insbesondere FCKW (Fluorchlorkohlenwasserstoff) und/oder FKW (Fluorkohlenwasserstoff) und/oder KW (Pentane und/oder Propane und/oder Butane) aufweisendes Fluid.

Insbesondere sind folgende Kohlenwasserstoffe zur Behandlung einzeln und/oder in Kombination vorgesehen und Bestandteil der zu behandelnden Fluide:

| | | | |
|---|---|---|---|
| R 11 | CFCl3 | Trichlorfluormethan | FCKW |
| R 12 | CF2Cl2 | Dichlordifluormethan | FCKW |
| R134a | C2H2F4 | 1,1,1,2-Tetrafluorethan | HFKW |
| R141b | C2H3FCl2 | 1,1-Dichlor-1-fluorethan | HFCKW |
| R290 | C3H8 | Propan | KW |
| R600 | C4H10 | Butan | KW |
| R600a | C4H10 | Methylpropan Isobutan | KW |
| R601 | C5H12 | n-Pentan | KW |
| R601a | C5H12 | Isopentan | KW |
| R601b | C5H12 | Neopentan | KW |
| | C5H10 | Cyclopentan | KW |

Diese o.g. Kohlenwasserstoffe werden als Kältemittel bezeichnet. Diese Kältemittel finden auch als Treibmittel (inbesondere C5H10 Cyclopentan), insbesondere Schäumen von beispielsweise porenhaltigem Kunststoff, insbesondere Polyurethan (PUR) Verwendung.

Dieses Fluid wird im Folgenden als Rohgas bezeichnet. In diesem Rohgas ist Kältemittel und/oder Treibmittel, insbesondere Mittel zum Schäumen enthalten.

Eine Anlage 01 zum Recyceln und/oder Behandeln und/oder Entsorgen von Gegenständen und/oder Materialien, die mindestens ein FCKW (Fluorchlorkohlenwasserstoff) und/oder FKW (Fluorkohlenwasserstoff) und/oder KW (Pentane, Propane, Butane) aufweisendes Fluid aufweisen. Bei diesen Gegenständen handelt es sich insbesondere um Kühlgeräte.

Diese insbesondere erste Anlage 01 ist insbesondere Teil einer Kühlgeräterecyclinganlage und/oder weist insbesondere mindestens eine Zerkleinerungsvorrichtung 02 auf. Dieser Zerkleinerungsvorrichtung 02 werden die zu behandelnden Gegenstände mittels einer Transportvorrichtung 03 zugeführt und zerkleinert. Im Falle von Kühlgeräten ist mittels mindestens einer Station 05 zumindest ein Kompressor aus den Kühlgeräten entfernt worden. Die mindestens eine Station 05 (im Ausführungsbeispiels zwei Stationen 05) ist vorzugsweise in der ersten Anlage 01 der Kühlgeräterecyclinganlage angeordnet. Die zerkleinerten Bestandteile der Gegenstände werden nach einzelnen Gruppen von Bestandteilen mittels mindestens einer Sortiereinrichtung 04 getrennt. Derartige Gruppen von Bestandteilen sind beispielsweise Kunststoffe KST und/oder Eisenmetalle FE und/oder Nichteisenmetalle NE. Bei den Kunststoffen wird insbesondere zwischen Polyurethan (PUR) und anderen Kunststoffen unterschieden. Der Zerkleinerungsvorrichtung ist vorzugsweise eine Pelletpresse 06 nachgeordnet. Die Polyurethan (PUR) Teile (Fraktale) werden der Pelletpresse 06 zugeführt und zu Pellets gepresst, wobei insbesondere Rohgas entsteht. Bei der Abkühlung des an der Pelletpresse 06 freigesetzten Rohgases kann wasserhaltiges und treibmittelhaltiges Kondensat entstehen. Insbesondere die Zerkleinerungsvorrichtung 02 und/oder die Pelletpresse 06 und/oder die Transporteinrichtung 03 und/oder die Sortiereinrichtung 04 sind jeweils mit mindestens einer Leitung 07 zum Transport von Rohgas verbunden.

Diese Leitung 07 führt das Rohgas im vorliegenden Ausführungsbeispiel vorzugsweise zu einer beispielsweise weiteren Anlage 11 zur Behandlung von Rohgas. Diese Anlage 11 ist insbesondere Teil einer Kühlgeräterecyclinganlage, insbesondere Teil der die Anlage 01 (insbesondere mit der mindestens einen Zerkleinerungsvorrichtung 02) aufweisenden Kühlgeräterecyclinganlage.

Im vorliegenden Ausführungsbeispiel sind vorzugsweise zumindest die Zerkleinerungsvorrichtung 02 und die Pelletpresse 06 zweimal in der Anlage 01 vorhanden. Vorzugsweise wird von beiden Zerkleinerungsvorrichtungen 02 und beiden Pelletpressen 06 beispielsweise von jeweils einer Leitung 07 Rohgas der Anlage 11 zur Behandlung von Rohgas zugeführt.

Die Anlage 11 zur Behandlung von mindestens einem Kohlenwasserstoff (insbesondere Halogenkohlenwasserstoffe und/oder Pentane, Propane, Butane) aufweisenden, insbesondere ersten Fluid (beispielsweise Gas, insbesondere Rohgas) weist mindestens eine Brennkammer 12 auf.

Diese Brennkammer 12 weist einen horizontalen Abschnitt 13 und einen sich an den horizontalen Abschnitt anschließenden insbesondere vertikalen Ausbrandteil 14 auf. Die als beispielsweise gasdichte Schweißkonstruktion ausgeführte Brennkammer 12 ist zumindest teilweise, vorzugsweise vollständig mit einer feuerfesten Auskleidung versehen, die insbesondere für eine max. Betriebstemperatur von 1250 °C ausgelegt ist. Zusätzlich ist vorzugsweise die innere Mantelfläche der beispielsweise im Wesentlichen aus Stahl bestehenden Brennkammer 12 mit einer hitzebeständigen Beschichtung zur Vermeidung von Korrosion versehen. Diese Beschichtung und/oder die Auskleidung weisen einen Anteil von mindestens 90%, insbesondere 98% Aluminiumoxid (z.B. Al₂O₃) auf. Die Brennkammer 12 ist vorzugsweise Hindernis frei und/oder Füllkörper frei und/oder arbeitet im Betrieb mit offener Flamme und ist insbesondere kein Porenbrenner.

Vorzugsweise ist an einem ersten Ende, vorzugsweise an einer Stirnseite des horizontalen Abschnittes, der Brennkammer 12 mindestens eine erste Zuführung 16 (im Ausführungsbeispiel sind zwei erste Zuführungen 16) zum Einbringen von Rohgas und mindestens eine zweite Zuführung 17 zum Einbringen eines zweiten Fluids vorgesehen.

Als zweites Fluid ist insbesondere Öl vorgesehen. Dieses Öl weist vorzugsweise Kältemittel (insbesondere FCKW (Fluorchlorkohlenwasserstoff) und/oder FKW (Fluorkohlenwasserstoff) und/oder KW (Pentane)) auf und ist beispielsweise aus einem Kompressor einer Kältemaschine abgeführt worden. Diese zweite Zuführung 17 ist vorzugsweise mit der Station 05 zum Entfernen von Kompressoren aus Kühlgeräten verbunden. Die zweite, vorzugsweise eine Düse aufweisende Zuführung 17 weist zusätzlich noch mindestens eine Zuleitung 18 für Druckmittel, insbesondere Druckluft und/oder mindestes eine Zuleitung 19 für sauerstoffhaltiges Verbrennungsgas, insbesondere Verbrennungsluft auf. Im vorliegenden Ausführungsbeispiel ist optional an der zweiten Zuführung 17 noch eine weitere Zuleitung 21 für ein weiteres Fluid, insbesondere Kondensat aus einem Sammelbehälter (insbesondere bei einer Abkühlung an der Pelletpresse 06 entstandenes Wasserkondensat) vorgesehen. Dieses Kondensat weist vorzugsweise Kältemittel (insbesondere FCKW (Fluorchlorkohlenwasserstoff) und/oder FKW (Fluorkohlenwasserstoff) und/oder KW (Pentane, Propane, Butane)) auf. Zusätzlich ist an dem ersten Ende, vorzugsweise an der Stirnseite der Brennkammer 12 noch ein zusätzlicher Brenner 22 (insbesondere Stützheizung) für ein weiteres Fluid, insbesondere für einen vorzugsweise gasartigen Brennstoff, vorzugsweise Flüssiggas ("LPG", Propan und/oder Butan und/oder Isobutan), zur Vorheizung und/oder Halten der Brennkammer 12 auf eine Betriebstemperatur (vorzugsweise 1.000°C - 1.200°C, insbesondere höher 1.100°C) vorgesehen.

An einem zweiten Ende, insbesondere am oberen Ende des vertikalen Ausbrandteiles 14, der Brennkammer 12 ist eine Ableitung 23 zur Abfuhr von entstandenem Abgas und vorzugsweise ein Notkamin 24 angeordnet.

Die mindestens eine erste Zuführung 16, im Ausführungsbeispiel die zwei ersten Zuführungen 16 zum Einbringen von Rohgas, sind über eine Leitung vorzugsweise mit mindestens einem Sensor 26 zur Messung der Konzentration des mindestens einen Kältemittels (insbesondere R11 und/oder R12 und/oder R134a und/oder R141b) und/oder Treibmittels (insbesondere R11 und/oder R12 und/oder R134a und/oder R141b und/oder Cyclopentan) des Rohgases und vorzugsweise mit mindestens einem Sensor 27 zur Messung der Menge des mindesten einen Kältemittels (insbesondere R11 und/oder R12 und/oder R134a und/oder R141b) und/oder Treibmittels (insbesondere R11 und/oder R12 und/oder R134a und/oder R141b und/oder Cyclopentan) des Rohgases und vorzugsweise mit mindestens einem Flammenfilter 28 verbunden, das eine evtl. Rückzündung aus der Brennkammer 12 von z.B. Pentananteilen im Rohgas verhindern soll. Diese das Flammenfilter 28 enthaltende Leitung ist wiederum über mindestens eine (im Ausführungsbeispiel über zwei) Leitung(en) mit mindestens einer (ersten) das Rohgas liefernden Quelle, im Ausführungsbeispiel mit zwei Quellen (eine erste Quelle und eine zweite Quelle) verbunden.

In diesen beiden Leitungen ist jeweils vorzugsweise ein Ventilator 29 zur Druckerhöhung enthalten. In einer Leitung nach dem Ventilator 29 ist vorzugsweise ein Sensor zur Messung eines Volumenstromes angeordnet, dessen Signal vorzugsweise über einen Frequenzumrichter den Elektromotor des Ventilators 29 regelt. Die Messung dieses Volumenstromes wird mittels eines Sensors zur Messung der Temperatur und/oder mittels eines Sensors zur Messung des Druckes bzgl. Temperatur und/oder Druck kompensiert. Vorzugsweise sind der Sensor zur Messung des Volumenstromes und/oder der Sensor zur Messung der Temperatur und/oder der Sensor zur Messung des Druckes nach dem Ventilator 29, vorzugsweise in der zur Brennkammer 12 führenden Leitung 07 angeordnet.

Im Ausführungsbeispiel ist die mindestens eine (erste) Quelle, vorzugsweise sind die erste Quelle und die zweite Quelle mit der zumindest einen Zerkleinerungsvorrichtung 02 und/oder der zumindest einen Pelletpresse 06 beispielsweise jeweils mittels einer Leitung 07 verbunden.

Zumindest eine dieser Quellen (im Ausführungsbeispiel, vorzugsweise beide Quellen) weist (weisen) zumindest eine Absaugeinrichtung für Rohgas auf und ist (sind) insbesondere in einer Kühlgeräterecyclinganlage angeordnet.

Zusätzlich zu dem aus der mindestens einen jeweiligen Quelle kommenden Rohgas kann aus mindestens einer weiteren, insbesondere mindestens einen Vorratsbehälter 31 (vorzugsweise eine Vielzahl von Vorratsbehältern 31, insbesondere Druckflaschen) aufweisenden Quelle Kältemittel und/oder Treibmittel aufweisendes Fluid (vorzugsweise Gas, insbesondere Rohgas) mittels mindestens einer weiteren Leitung 32 zugeführt werden. Dieses aus insbesondere aus einem externen, nicht mit der vorliegenden Anlage und/oder Prozess, insbesondere nicht mit der Kühlgeräterecyclinganlage gekoppelten Verfahren stammende Fluid (insbesondere ist das Fluid nicht in der Anlage 01 der Kühlgeräterecyclinganlage separiert und/oder freigesetzt worden) wird beispielsweise vor dem jeweiligen Ventilator 29 (auf der Saugseite) in die von der jeweiligen Rohgas liefernden Quelle transportierenden Leitung 07 eingespeist. Dazu wird die von dem mindestens einen Vorratsbehälter 31 ausgehende Leitung 32 vorzugsweise über zwei Teilzweige mit den von den beiden Quellen ausgehenden Leitungen 07 beispielsweise unter Zwischenschaltung jeweils eines Absperrventils 33 verbunden. Diese beiden Absperrventile 33 sind vorzugsweise an den Betrieb der jeweiligen Quelle des Rohgases, beispielsweise an den jeweiligen zugeordneten Ventilator 29 gekoppelt, so dass eine zusätzlich Einbringung von weiteren Fluid der weiteren Quelle nur bei Rohgas liefernden Quelle, beispielsweise laufenden Ventilator 29 erfolgen kann.

Somit ist die Verbrennung dieses Kältemittel und/oder Treibmittel aufweisenden Fluids der weiteren Quelle möglich, wobei insbesondere eine Dosierung (vorzugsweise einer Menge des der Brennkammer 12 zugeführten Fluids der weiteren Quelle), insbesondere automatisch über eine FCKW und/oder FKW Messung vorzugsweise vor der Brennkammer 12, insbesondere am Eingang der Brennkammer 12 erfolgt. Die FCKW und/oder FKW Messung erfolgt vorzugsweise in der Leitung 07 zwischen dem Ventilator 29 oder den jeweiligen Ventilatoren 29 und der Brennkammer 12.

Dazu wird vorzugsweise mit dem mindestens einen Sensor 26 zur Messung der Konzentration des mindesten einen Kältemittels und/oder Treibmittels des Rohgases die Konzentration des mindesten einen Kältemittels und/oder Treibmittels, insbesondere von FCKW und/oder FKW (besonders bevorzugt von R11 und/oder R12 und/oder R134a und/oder R141b und/oder Cyclopentan) in dem Rohgas vor der Brennkammer 12 ermittelt. Vorzugsweise ist in der mindestens einen die weitere, insbesondere externe Quelle mit der Brennkammer 32 verbindenden Leitung 32 mindestens ein Ventil 35 angeordnet. Dieses Ventil 35 wird in Abhängigkeit der vor der Brennkammer 12, insbesondere mittels des mindestens einen Sensors 26, gemessenen Konzentration des Kältemittels und/oder Treibmittels betätigt. Mittels dieses Ventils 35 wird die Menge des der Brennkammer 12 zugeführten Fluids, insbesondere Gases, (d.h. die Dosierung) der weiteren Quelle festgelegt. Insbesondere wird der Volumenstrom des der Brennkammer 12 zugeführten Fluids derweiteren Quelle in Abhängigkeit der Konzentration des mindestens einen Kältemittels und/oder Treibmittels mittels des Ventils 35 (insbesondere Stromregelventil und/oder Proportionalventil) gesteuert oder geregelt. Insbesondere ermittelt der mindestens eine Sensor 26 die Anteile der Kältemittel R11 und/oder R12 und/oder R134a und/oder R141b und/oder Cyclopentan in dem der Brennkammer 12 zugeführten Rohgas aller Quellen. Die Brennkammer 12 kann eine festgelegte und/oder vorbestimmte maximale Menge (kg/m³) und/oder festgelegte und/oder vorbestimmte maximale Konzentration von Kältemittel und/oder Treibmittel verarbeiten und/oder umwandeln und/oder "cracken". Wird beispielsweise eine niedrigere Konzentration als die maximale Konzentration vor der Brennkammer 12, insbesondere aufgrund niedriger Konzentration von Kältemittel und/oder Treibmittel aus der mindestens ersten Quelle ermittelt, öffnet das Ventil 35 und führt zur Erhöhung der Konzentration von Kältemittel und/oder Treibmittel vor und/oder in der Brennkammer 12. Bei Erreichen einer vorbestimmten, beispielsweise der maximalen Konzentration schließt das Ventil 35. Der mindestens eine Sensor 26 zur Messung der Konzentration des mindesten einen Kältemittels (insbesondere R11 und/oder R12 und/oder R134a und/oder R141b) und/oder Treibmittels (insbesondere R11 und/oder R12 und/oder R134a und/oder R141b und/oder Cyclopentan) des Rohgases und das der weiteren Quelle zugeordnete Ventil 35 sind mittels einer Leitung, insbesondere einer Steuerleitung und/oder Datenleitung, beispielsweise unter Zwischenschaltung mindestens einer elektronischen Steuereinrichtung (z.B. Rechner) verbunden.

Dieses Kältemittel und/oder Treibmittel aufweisende Fluid der weiteren Quelle ist insbesondere aus mindestens einer Klimaanlage beispielsweise eines Gebäudes und/oder Fahrzeuges entfernt und/oder gesammelt worden und in dem mindestens einen Vorratsbehälter 31 gespeichert. Auch kann dieses Kältemittel und/oder Treibmittel aufweisende Fluid aus einer anderen Kühlgeräterecyclinganlage kommen, wobei diese andere Kühlgeräterecyclinganlage nicht mit der Anlage 01 und/oder der vorgeschriebenen Kühlgeräterecyclinganlage verbunden ist. Insbesondere weist dieses Kühlmittel und/oder Treibmittel aufweisende Fluid, insbesondere Gas der weiteren Quelle FCKW und/oder FKW, beispielsweise R11 und/oder R12 und/oder R134a und/oder R141b auf.

Im vorliegenden Beispiel erfolgt die Zufuhr für sauerstoffhaltiges Verbrennungsgas, insbesondere Verbrennungsluft, für die zweite Zuführung 17 und den zusätzlichen Brenner 22 der Brennkammer 12 mittels eines gemeinsamen Ventilators 34. In einer Leitung nach dem Ventilator 34 ist vorzugsweise ein Drucksensor 36 angeordnet, dessen Signal vorzugsweise über einen Frequenzumrichter den Elektromotor des Ventilators 34 regelt. Dieser drehzahlveränderliche Ventilator 34 ist insbesondere druckgeregelt, d.h. die Drehzahl des Ventilators 34 ist abhängig vom Druck in der sich vorzugsweise unmittelbar an den Ventilator 34 anschließenden Leitung. Diese Leitung verzweigt sich in zwei Teilleitungen, wobei die erste Teilleitung über eine Gasklappe 37 mit der zweiten Zuführung 19 und die zweite Teilleitung über eine Gasklappe 38 mit dem zusätzlichen Brenner 22 verbunden ist. Durch den druckgeregelten Ventilator 34 herrscht vor den beiden Gasklappen 37, 38 ein konstanter Vordruck. Eine Öffnung der dem zusätzlichen Brenner 22 zugeordneten Gasklappe 38 ist abhängig von einer Temperatur in der Brennkammer 12. Zur Ermittlung der Temperatur der Brennkammer 12 ist vorzugsweise im vertikalen Ausbrandteil mindestens ein Sensor 39, beispielsweise ein Sensor für die Regelung der Temperatur und ein zusätzlicher Sensor 41 für die Überwachung einer Grenztemperatur angeordnet. Eine Öffnung der der zweiten Zuführung 17 zugeordneten Gasklappe 37 ist abhängig von einer Temperatur des Abgases am Ende der Anlage 11. Zur Ermittlung der Temperatur des Abgases nach der Brennkammer 12 ist vorzugsweise am Ende der Anlage 11 ein Sensor 42 angeordnet. Zur Ermittlung der Sauerstoffgehaltes, insbesondere der Konzentration von Stauerstoff im Abgas ist vorzugsweise am Ende der Anlage 11 ein weiterer Sensor angeordnet. Dieser Sensor überwacht mindestens einen vorgegebene Minimalwert und mindestens einen vorgegebenen Maximalwert der Konzentration von Sauerstoff. Im vorliegenden Ausführungsbeispiel ist keine Vorwärmung der Verbrennungsluft angeordnet, die aber bedarfsweise vorgesehen sein kann.

In einer Vorwärmphase wird die Brennkammer 12 zunächst mit dem zusätzlichen Brenner 22 mit beispielsweise Flüssiggas als Brennstoff vorzugsweise über eine Temperaturrampe auf die vorgegebene Betriebstemperatur (vorzugsweise 1.000°C - 1.250°C, insbesondere höher 1.100°C) vorgeheizt. Nach Erreichen der vorgegebenen Temperatur erfolgt die Freigabe für die Betriebsphase, d.h. für den Betrieb mit Rohgas. In der Betriebsphase wird mindestens ein Kältemittel und/oder Treibmittel aufweisendes Fluid, insbesondere Gas, vorzugsweise zwei unterschiedliche, insbesondere Kältemittel und/oder Treibmittel aufweisende Fluide (beispielsweise FCKW aufweisendes Gas und Öl) gemeinsam verbrannt. Vorzugsweise wird zusätzlich noch ein drittes insbesondere Kältemittel und/oder Treibmittel aufweisendes Fluid (beispielsweise Kondensat) gemeinsam mit dem ersten Fluid und zweiten Fluid verbrannt. Insbesondere werden zweites Fluid und drittes Fluid gemeinsam, insbesondere mittels einer Düse zerstäubt und der Brennkammer 12 zugeführt.

In der Betriebsphase wird der Strom von Rohgas von einer Quelle (insbesondere von einer Recyclinglinie) der beiden Quellen (insbesondere von den beiden Recyclinglinien) oder von beiden Quellen mittels des jeweiligen Ventilators 29 getrennt gefördert, insbesondere abgesaugt. Dem Rohgas aus der jeweiligen Quelle kann aus der weiteren, externes Rohgas fördernden Quelle weiteres Rohgas zugeführt werden. Auch ist es möglich, Rohgas nur aus der weiteren, externes Rohgas fördernden Quelle und/oder aus mindestens einer der anderen beiden Quellen der weiteren Behandlung zuzuführen. Zur Messung der Konzentration des mindestens einen Kältemittels und/oder Treibmittels des Rohgases wird zumindest ein repräsentativer Teil des zugeführten Rohgases dem mindestens einen Sensor 26 zur Messung der Konzentration zugeleitet. Der Sensor 26 zur Messung der Konzentration erfasst die Konzentration im zusammengeführten Gas, insbesondere Rohgas der ersten Quelle und/oder beiden Quellen und/oder der weiteren, externen Quelle. Danach passiert das Rohgas das Flammenfilter 28 um anschließend mit einem Vordruck von z.B. 25 mbar über die zwei Zuführungen 16, 17 in die Brennkammer 12 eingeblasen wird.

Zum Erreichen und/oder Halten der erforderlichen Reaktionstemperatur (entspricht im Wesentlichen der Betriebstemperatur) wird über die zweite, eine Düse aufweisende Zuführung 17 das zweite Fluid der Brennkammer 12 zugeführt. Gleichzeitig wird der Brennkammer 12 das dritte als Kondensat ausgeführte Fluid gemeinsam mit dem zweiten Fluid über die Düse zugeführt.

Mittels Druckluft (ca. 4 bar) zerstäubt diese Düse das zweite als Öl ausgebildete Fluid, ggf. das dritte Fluid (beispielsweise Kondensat) und sprüht das (die) Fluid(e) in die Brennkammer 12. Diese Düse erzeugt ein sehr feines Tropfenspektrum mit guter Verteilung im Flammbereich. Die für das Öl und/oder Kondensat erforderliche Verbrennungsluft wird ebenfalls über die zweite Zuführung 17 zugeführt, wobei die Menge der Verbrennungsluft insbesondere zusätzlich über eine Sauerstoffregelung an den tatsächlichen Verbrennungsluftbedarf angepasst werden kann. Die zweite Zuführung 17 ist auf einen konstanten Brennkammerdruck von beispielsweise minus 2 mbar, d.h. Unterdruck ausgelegt und wird über eine Temperaturregelung insbesondere mit festem Gas/Luftverhältnis modulierend betrieben. Mittels des Sensors 39 am Ende der Brennkammer 12 wird die Temperatur der Brennkammer 12 ermittelt und vorzugsweise geregelt. In Abhängigkeit der Temperatur der Brennkammer 12 wird die zugeführte Menge der Verbrennungsluft beispielsweise mittels einer Gasklappe verändert. Im vorliegenden Ausführungsbeispiel wird dazu die dem zusätzlichen Brenner 22 zugeordnete Gasklappe 38 verwendet.

Die Dimensionierung der Brennkammer 12 und damit die Verweilzeit des Rohgases in der Brennkammer 12 sind so ausgelegt, dass die Emissionsgrenzwerte deutlich unterschritten werden können.

Insgesamt laufen oberhalb der jeweiligen Reaktionstemperatur (d.h. bei ca. 900 - 1000°C) bei niedrigem Sauerstoffgehalt und Anwesenheit von Wasserdampf vereinfacht und ohne Berücksichtigung des Brennerabgases eine oder mehrere folgender Reaktionen ab:

| | | | | |
|---|---|---|---|---|
| | R11 | CFCl₃ + 2H₂O | → | CO₂+3HCl+HF |
| und/oder | R12 | CF₂Cl₂ + 2H₂O | → | CO₂+2HCl+2HF |
| und/oder | R134a | C₂H₂F₄ + 2H₂O+3/2O₂ | → | 2CO₂+4HF+H₂O |
| und/oder | R141b | C₂H₃FCl₂ + 2O₂ | → | 2CO₂+ 2HCl+HF |
| und/oder | Cyclopentan | 2C₅H₁₀ + 15O₂ | → | 10CO₂ +10H₂O |

Im Wesentlichen wird also CO₂ (Kohlendioxid), HCl (Chlorwasserstoff) und HF (Fluorwasserstoff) erzeugt.

Da der Pentananteil sich aufgrund unterschiedlicher Eingangskonzentrationen schnell ändern kann, wird der Sauerstoffwert beispielsweise mittels der Verbrennungsluft in der Brennkammer geregelt.

Elementares Chlor reagiert aufgrund der Anwesenheit von Wasserdampf und geringem Sauerstoffüberschuß zu HCl.

Die optimale Betriebsweise liegt deshalb bei ca. 900 -1300°C, insbesondere höher 1.100°C Verbrennungstemperatur, bei einem möglichst geringen Sauerstoffgehalt von beispielsweise 2 - 6%, vorzugsweise 3 - 5%, bei einer Verweilzeit von 1 - 3 s und bei einem Wassergehalt von über 10 - 15%.

An mindestens einen ersten Wäscher 46 ist die Ableitung 23 der Brennkammer 12 zur Abfuhr von entstandenem Abgas abgeschlossen. Vorzugsweise sind die Brennkammer 12 und der erste Wäscher 46 unmittelbar hintereinander, insbesondere ohne Zwischenschaltung weiterer Wärmetauscher angeordnet. Dieser Wäscher 46 ist vorzugsweise als Quenche 46 ausgeführt, wobei die Ableitung 23 in ein oberes Ende der Quenche 46 mündet. Dieses obere, die Eintrittszone der Quenche 46 aufweisendes Ende der Quenche ist in einem hochhitze- und korrosionsbeständigen Werkstoff ausgeführt. In diesem oberen Ende ist auch mindestens eine Düse 47 (insbesondere eine Düsenlanze) zum Einsprühen einer Kühlflüssigkeit und/oder Waschflüssigkeit angeordnet. Zumindest der obere Teil (insbesondere die Quenchzone) der Quenche 46 ist mit einem Kühlmantel versehen, der von der Kühlflüssigkeit durchströmt wird. Dieser Kühlmantel ist mittels Öffnungen mit einem Innenraum der Quenche verbunden, so dass ein Teilstrom der Kühlflüssigkeit an der inneren Mantelfläche, insbesondere in der Quenchzone der Quenche 46 eine Filmströmung erzeugt.

Die Quenche 46 wird von oben nach unten vom Abgas der Brennkammer 12 und der Kühlflüssigkeit/Waschflüssigkeit im Gleichstrom durchströmt, wobei eine Längsachse der Düsenlanze und/oder eine Strömungsrichtung des Abgases und/oder eine Strömungsrichtung der Kühlflüssigkeit am Kühlmantel im Innenraum der Quenche 46 parallel zu einer vertikalen Längsachse der Quenche 46 und/oder zueinander und von oben nach unten weisend angeordnet (ist) sind.

Ein unteres Ende der Quenche 46 ist als Sammelbehälter 48 (Quenchvorlage) für die Kühlflüssigkeit ausgebildet. An diesen Sammelbehälter 48 ist vorzugsweise ein Kreislaufsystem 49 zur Zirkulation der Kühllflüssigkeit zur Düse 47 und zum Kühlmantel angeschlossen. An dieses Kreislaufsystem 49 ist eine Ableitung 51 und/oder Entnahmeneinrichtung 52 zur Entnahme von als Dünnsäure ausgebildeter Kühlflüssigkeit und zum Transport an einen Tank angeschlossen. Zusätzlich kann an den Kühlmantel ein Versorgungssystem 53 für Frischwasser angeschlossen sein, das in einem Notbetrieb dem Kühlmantel Frischwasser zuführt. Der Notbetrieb tritt beispielweise bei Pumpenausfall oder Stromausfall ein, wenn eine Temperatur eines Abgases nach der Quenche 46 einen vorgegebenen Grenzwert überschreitet. Für den Notbetrieb kann eine Notstromversorgung vorgesehen sein, die beispielsweise mindestens eine Pumpe des Versorgungssystems 53 für Frischwasser betreibt.

Die Quenche 46 kühlt das Abgas der Brennkammer 12 schnell vorzugsweise auf eine Sättigungstemperatur des Abgases ab. Durch diese schockartige Kühlung (d.h. Abschrecken) wird die Rekombination der durch die Verbrennung getrennten z.B. chlor- und/oder fluororganischen Verbindungen vermieden. Die Düse 47 der Kühlflüssigkeit erzeugt ein sehr feines Tropfenspektrum, das eine kurze Verdampfungszeit und damit Abkühlzeit bewirkt. Am Ende der Quenchzone hat das Abgas annähernd seine Sättigungstemperatur von ca. 75°- 80°Cerreicht. Die Quenche 46 kühlt das Abgas der Brennkammer 12 um mindestens 700°C ab.

Innerhalb der Quenche 12 erfolgt aufgrund hoher Konzentration von HCL und/oder HF eine Reduzierung, wobei eine Dünnsäure (Salzsäure und/oder Fluorwasserstoffsäure, insbesondere in wässriger Form) aus der Kühlflüssigkeit in Verbindung mit dem Abgas auf Basis einer physikalischen Absorption erzeugt wird.

Am Ende der Quenchzone weist die Quenche 46 ein Übergangsstück mit Kondensator auf. Am unteren Ende der Quenche 46 und beispielsweise am oberen Ende des Sammelbehälters 48 der Quenche 46 ist eine weitere Leitung 54 zur Überführung des Abgases in beispielsweise mindestens einen weiteren Wäscher 56, vorzugsweise in mindestens zwei weitere Wäscher 56, 57. Die Quenche 46, der zweite Wäscher 56 und der dritte Wäscher 57 sind über Leitungen zum Transport des Abgases bezogen auf eine Strömungsrichtung des Abgases der Brennkammer 12 seriell nachgeordnet.

Jeder der beiden Wäscher 56, 57 weist in seinem oberen Ende mindestens eine Düse 58 zum Einsprühen von Kühlflüssigkeit, in der Mitte eine Füllkörperschüttung 59 und an seinem unteren Ende einen Sammelbehälter 61 für Kühlflüssigkeit auf. Das Abgas wird jeweils oberhalb des Sammelbehälters 61 und vorzugsweise unterhalb der Füllkörperschüttung 59 in den jeweiligen Wäscher 56, 57 eingeleitet und von unten über die Füllkörperschüttung 59 nach oben bis zu einem oberen Ende des jeweiligen Wäschers 56, 57 geleitet. Die Kühlflüssigkeit wird von oben aus den Düsen 58 über die Füllkörperschüttung 59 nach unten in den Sammelbehälter 61 geführt. Die beiden Wäscher 56, 57 arbeiten daher im Gegenstrom, d.h. sind Gegenstromwäscher. Der erste Wäscher 46 ist vorzugsweise ein Gleichstromwäscher.

An diese jeweiligen Sammelbehälter 61 des zweiten Wäschers 56 und dritten Wäschers 57 ist vorzugsweise ein Kreislaufsystem 62 zur Zirkulation der Kühlflüssigkeit/Waschflüssigkeit zur Düse 58 angeschlossen. Alle drei Wäscher 46, 56, 57 sind mit getrennten Kreislaufsystemen für Kühlflüssigkeit/Waschflüssigkeit und vorzugsweise mit eigenen Überwachungseinrichtungen für das Niveau der Kühlflüssigkeit/Waschflüssigkeit ausgestattet.

Die Konzentration von Schadstoffen (insbesondere Halogenkohlenwasserstoff) im Abgas und die Konzentration von Säure nehmen aufgrund der mehrstufigen Wäsche vom ersten Wäscher 46 ausgehend in Richtung letzten Wäscher 57 ab. Mittels eines vorzugsweise eine Leitfähigkeit der Waschflüssigkeit erfassenden Sensors wird die Konzentration von Säure im Kreislaufsystem 49 des ersten Wäschers 46 erfasst. Bei Erreichen eines vorgewählten, insbesondere veränderlich einstellbaren Grenzwerts der Konzentration von Säure wird ein Teilstrom der Waschflüssigkeit beispielsweise am Ort der höchsten Konzentration, insbesondere durch die in Abhängigkeit von der ermittelten Konzentration betätigbare Entnahmeeinrichtung 51, 52 ausgeschleust. Dieser Teilstrom und ggf. aufgetretene Verdampfungsverluste werden vorzugsweise von der Überwachungseinrichtung für das Niveau der Kühlflüssigkeit/Waschflüssigkeit erfasst und durch Waschflüssigkeit des nachfolgenden, zweiten Wäschers 56 ersetzt. Entsprechend wird die fehlende Waschflüssigkeit des zweiten Wäschers 56 durch Waschflüssigkeit des dritten Wäschers 57 ersetzt. Die fehlende Waschflüssigkeit des letzten, dritten Wäschers 57 wird durch Frischwasser ersetzt.

Auch in dem zweiten Wäscher 56 und dritten Wäscher 57 erfolgt wie bereits in der Quenche 46 aufgrund von HCL und/oder HF eine Reduzierung, wobei eine Dünnsäure aus der Waschflüssigkeit in Verbindung mit dem Abgas auf Basis einer physikalischen Absorption erzeugt wird.

### Dabei werden überführt

HCl(Gas) → HCl(Wasser) + Wärme

HF(Gas) → HF (Wasser)

Von dem letzten Wäscher 57 ausgehend wird über eine weitere Leitung und einem Tropfenabscheider 63 das gereinigte Abgas (Reingas) mittels eines Ventilators 64 zum Transport des Abgases einer Reingasleitung mit Messstrecke zugeführt.

Die Messstrecke ist vorzugsweise mit mindestens einem Sensor 66 zur Messung der Konzentration des mindestens einen Kältemittels (insbesondere R11 und/oder R12 und/oder R134a und/oder R141b) und/oder Treibmittels (insbesondere R11 und/oder R12 und/oder R134a und/oder R141b und/oder Cyclopentan) des gereinigten Abgases und vorzugsweise mit mindestens einem Sensor 67 zur Messung der Menge des mindestens einen Kältemittels (R11 und/oder R12 und/oder R134a und/oder R141b) und/oder Treibmittels (R11 und/oder R12 und/oder R134a und/oder R141b und/oder Cyclopentan) des gereinigten Abgases versehen. Auch ist nach dem letzten Wäscher 57 der Sensor 42 für die der zweiten Zuführung 19 zugeordneten Gasklappe 37 angeordnet.

Von der Messstrecke gelangt das gereinigte Abgas zu einem Kamin 68.

Der Ventilator 64 ist insbesondere drehzahlgeregelt ausgeführt, vorzugsweise in Abhängigkeit eines Druckes in der Anlage 11. Mit diesem Ventilator 64 wird unter unterschiedlichen Lastbedingungen in der Anlage 11 ein konstanter Unterdruck aufrechterhalten um das gereinigte Abgas der Anlage 11 über den Kamin 68 in die Atmosphäre abzuleiten.

Zumindest ein Teil (vorzugsweise alle) der Abgas berührenden Teile sind zumindest ab der Quenchzone bis einschließlich letztem Wäscher 57 zumindest teilweise (vorzugsweise vollständig), vorzugsweise aus GFK (Glasfaserverstärkter Kunststoff) gefertigt, wobei eine Auskleidung aus insbesondere PVDF (Polyvinylidenfluorid) vorgesehen sein kann.

In einer Ausführung erfolgt die Messung der Konzentration des Kohlenwasserstoff aufweisenden Fluids, insbesondere des Kältemittels und/oder Treibmittel mittels mindestens einer photometrischen Einrichtung (Photometer). Insbesondere der mindestens eine die Konzentration des Kältemittels und/oder Treibmittels (insbesondere im Rohgas) messende Sensor 26 vor der Brennkammer und/oder der mindestens eine die Konzentration des Kältemittels und/oder Treibmittels (insbesondere im Abgas) messende Sensor 66 nach der Brennkammer sind entsprechend ausgebildet. Beispielsweise ist bei der photometrischen Einrichtung mindestens eine vorzugsweise breitbandige Infrarotstrahlung erzeugende Strahlungsquelle, mindestens eine insbesondere als Küvette ausgebildete Probenzelle und mindestens ein Detektor vorgesehen.

Die Probenzelle ist mittels Öffnungen und/oder Leitungen mit mindestens einem Probengas (Rohgas oder Reingas) beschickt. Zwischen Probenzelle und Detektor(en) ist beispielsweise mindestens ein Filter angeordnet. Anstelle mindestens eines Filters kann auch eine Modulationseinrichtung, beispielsweise in Form eines Prismas oder eine Gitteranordnung angeordnet sein.

Eine von der Strahlungsquelle ausgehende Strahlung wird durch das sich in der Probenzelle befindliches Probengas geführt. Diese Strahlung wird von dem Probengas entsprechend seiner Stoffzusammensetzung wellenselektiv absorbiert. Ein Ausmaß der Absorption eines bestimmten Wellenlängenbereiches ist ein Maß für die Konzentration eines bestimmten Stoffanteils.

Sollen mehrere verschiedene Stoffe und/oder Stoffanteile des Probengases ausgewertet werden, muss für diesen Stoffanteil die Absorption eines bestimmten, dem Stoffanteil zugeordneten Wellenlängenbereiches und/oder einer bestimmten Wellenlänge gemessen werden.

Daher werden im vorliegen Ausführungsbeispiel mehrere Kombinationen von Filter und Detektoren verwendet.

Vorzugsweise werden die Anteile (Konzentration) der Kühlmittel und/oder Kältemittel und/oder Treibmittel R11 und/oder R12 und/oder R134a und/oder R141b in dem Rohgas und/oder Reingas ermittelt.

Dazu werden beispielsweise mit einem ersten Photometer mit einem Dreifachdedektor die Kühlmittel R134a und R141b und R12 eines in der Küvette befindlichen Probengas gleichzeitig und/oder unmittelbar hintereinander gemessen. Die drei Detektoren sind dabei auf einer gemeinsamen Platine angeordnet. Mit einem zweiten Photometer werden R11 und R12 erfasst, wobei der Messwert für R12 nur zu einer Kompensation dient. R11 wird ausgewertet und weiterverarbeitet. Zwischen den einzelnen Stoffen und/oder Stoffanteilen bestehen folgende Querempfindlichkeiten:

| | | |
|---|---|---|
| R141b -> R12 17,1 % | R134a -> R12 0,2 % | R11 -> R12 1,5 % |
| R141b -> R11 0,4 % | R134a -> R11 3,7 % | R12 -> R11 1,6 % |
| R134a -> R141b 59,8 % | R12 -> R141b 186,1 % | R11 -> R141b 6,6 % |
| R141b -> R134a 2,9 % | R12 ->134a 2,5 % | R11 -> R134a 0,0 % |

Die Optimierung dieser Querempfindlichkeiten erfolgt z.B. in einer Software durch Korrekturwerte. Insbesondere erfolgt die Korrektur mittels eines Gleichungssystems dritter Ordnung und/oder nichtlinearer Korrekturen. Vorzugsweise wird eine zwischen den mindestens zwei Kältemitteln und/oder Treibmitteln, insbesondere zwischen R11 und/oder R12 und/oder R134a und/oder 141b bestehende Querempfindlichkeit mittels mindestens eines Korrekturwertes korrigiert und/oder optimiert.

Folgende Restfehler sind nach der Optimierung vorhanden:
System R11 (inkl. R12 Querempfindlichkeitskorrektur)
   für Reingas = 2 mg/m³ - 2 g/m³ / Nachweisgrenze 2 mg
   für Rohgas = 2 g/m³ - 100 g/m³ / Nachweisgrenze 2 g
System R12, R134a, R141b (inkl. Querempfindlichkeitskorrektur)
   für Reingas = 2mg/m³ - 2 g/m³ / Nachweisgrenze 2 mg für R12 u. R134a
   für Reingas = 5 mg/m³ - 2 g/m³ / Nachweisgrenze 5 mg für R141 b
   für Rohgas = 2g/m³ 100 g/m³ / Nachweisgrenze 2 g für R12, R134a, R141 b

Mit diesen die Konzentration der einzelnen Kältemittel und/oder Treibmittel festlegenden Werten, d.h. die Konzentrationswerte von R11, R12, R134a und R141b und der zugehörigen Menge von Fluid, vorzugsweise des Rohgases und/oder Reingases wird die zugehörige Menge von R11, R12, R134a und R141b pro Zeiteinheit ermittelt. Aus der Differenz der in die Anlage 11 eingebrachten Mengen und der die Anlage 11 verlassenden Mengen der Kältemittel und/oder Treibmittel wird ein Wert für die Menge der in der Anlage 11 aufgearbeiteten Kühlmittel für jedes Kältemittel und/oder Treibmittel einzeln und/oder für alle Kältemittel und/oder Treibmittel gemeinsam berechnet. Aus diesem Wert und/oder diesen Werten werden Äquivalente von umweltgefährdeten Stoffen insbesondere CO₂ Äquivalente gebildet und/oder zertifiziert. Dieser Wert und/oder diese Werte und/oder diese CO₂ Äquivalente werden mit einer eindeutigen, insbesondere anlagenspezifischen Identifikation verknüpft und ggf. online an eine Zertifizierungsstelle und/oder Handelsagentur weitergeleitet. Die Menge der in der Anlage 11 aufgearbeiteten Kältemittel und/oder Treibmittel und/oder mindestens ein entsprechendes CO₂ Äquivalent werden mit einer anlagenspezifischen Identifikation versehen und/oder zertifiziert.

Im vorliegenden Ausführungsbeispiel werden vorzugsweise vor der Brennkammer 12 jeweils eine Konzentration mindestens von R11, R12, R134a und R141b in dem Kältemittel und/oder Treibmittel aufweisenden Gas und nach der Brennkammer 12 jeweils eine Konzentration mindestens von R11, R12, R134a und R141b in dem Abgas der Brennkammer (12) gemessen.

In der Anlage 01 zum Recyceln und/oder Behandeln und/oder Entsorgen von Gegenständen und/oder Materialien ist der jeweiligen Pelletpresse 06 ein Erhitzer 71 und ein Pelletkühler 72 nachgeordnet. Zwischen dem Erhitzer 71 und/oder dem Pelletkühler 72 und der Pelletpresse 06 ist ein Filter 73 zwischengeschaltet. Außerdem ist an der Pelletpresse 06 für entstehenden Staub 78 eine Staubrückführung 74 mit einem BigBag 76 angeordnet, so dass saubere Luft 83 austritt. Die Pelletpresse 06 arbeitet mit einem Pelletaustrag 79 für Pellets 77und einem Rohgaskühler 81 zusammen. Der Rohgaskühler 81 erhält Wasser 82 aus einem Wassersammelbehälter 84.

Der Erhitzer 71, der Pelletkühler 72 und der Rohgaskühler sind mit einem Kälteaggregat 88 verbunden.

Im vorliegenden Ausführungsbeispiel sind vorzugsweise zumindest die Zerkleinerungsvorrichtung 02 und die Pelletpresse 06 zweimal in der Anlage 01 vorhanden, d.h. eine erste Linie und eine zweite Linie. Vorzugsweise wird von beiden Zerkleinerungsvorrichtungen 02 und beiden Pelletpressen 06 beispielsweise von jeweils einer Leitung 07, d.h. mittels eines Rohgas Eintritt der ersten Linie und/oder mittels eines Rohgas Eintritt der zweiten Linie, Rohgas der Anlage 11 zur Behandlung von Rohgas zugeführt.

### Bezugszeichenliste

- 01: Anlage
- 02: Zerkleinerungsvorrichtung
- 03: Transportvorrichtung
- 04: Sortiereinrichtung
- 05: Station
- 06: Pelletpresse
- 07: Leitung
- 08: -
- 09: -
- 10: -
- 11: Anlage
- 12: Brennkammer
- 13: Abschnitt (12), horizontal
- 14: Ausbrandteil (12)
- 15: -
- 16: Zuführung (12), Rohgas
- 17: Zuführung (12), Öl
- 18: Zuleitung (12), Druckluft
- 19: Zuleitung (12), Verbrennungsluft
- 20: -
- 21: Zuleitung (12), Kondensat
- 22: Brenner (12)
- 23: Ableitung (12)
- 24: Notkamin (12)
- 25: -
- 26: Sensor, Konzentration Rohgas
- 27: Sensor, Menge Rohgas
- 28: Flammenfilter
- 29: Ventilator
- 30: -
- 31: Vorratsbehälter
- 32: Leitung
- 33: Absperrventil
- 34: Ventilator (19; 22)
- 35: Ventil
- 36: Drucksensor (34)
- 37: Gasklappe (19)
- 38: Gasklappe (22)
- 39: Sensor
- 40: -
- 41: Sensor
- 42: Sensor; Temperatur
- 43: -
- 44: -
- 45: -
- 46: Wäscher, Quenche
- 47: Düse (46)
- 48: Sammelbehälter (46)
- 49: Kreislaufsystem (46)
- 50: -
- 51: Ableitung (49)
- 52: Entnahmevorrichtung
- 53: Versorgungssystem
- 54: Leitung
- 55: -
- 56: Wäscher, zweiter
- 57: Wäscher, dritter
- 58: Düse (56; 57)
- 59: Füllkörperschüttung (56; 57)
- 60: -
- 61: Sammelbehälter (56; 57)
- 62: Kreislaufsystem
- 63: Tropfenabscheider
- 64: Ventilator
- 65: -
- 66: Sensor, Konzentration Abgas
- 67: Sensor; Menge Abgas
- 68: Kamin
- 69: -
- 70: -
- 71: Erhitzer
- 72: Pelletkühler
- 73: Filter
- 74: Staubrückführung
- 75: -
- 76: BigBag
- 77: Pellets
- 78: Staub
- 79: Pelletaustrag
- 80: -
- 81: Rohgaskühler (Pelletierung)
- 82: Wasser
- 83: Luft, sauber
- 84: Wassersammelbehälter
- 85: -
- 86: Rohgas Eintritt Linie, erste
- 87: Rohgas Eintritt Linie, zweite
- 88: Kälteaggregat

## Patentansprüche

1. Verfahren zur Behandlung von Kältemittel und/oder Treibmittel aufweisenden Gasen mittels mindestens einer Brennkammer (12), wobei der Brennkammer (12) Kältemittel und/oder Treibmittel aufweisendes Gas aus mindestens einer ersten Quelle einer Kühlgeräterecyclinganlage zugeführt wird, wobei vor der Brennkammer (12) mit mindestens einem Sensor (26) eine Konzentration des mindestens einen Kältemittels und/oder Treibmittels in dem der Brennkammer (12) zuzuführenden Gas gemessen wird, wobei nach der Brennkammer (26) mit mindestens einem Sensor (66) eine Konzentration des mindestens einen Kältemittels und/oder Treibmittels in einem Abgas der Brennkammer (12) gemessen wird, wobei der Brennkammer (12) zusätzlich zu dem Gas der ersten Quelle Kältemittel und/oder Treibmittel aufweisendes Gas aus mindestens einer weiteren Quelle zugeführt wird, wobei eine Dosierung des Gases der mindestens einen weiteren Quelle über eine FCKW (Fluorchlorkohlenwasserstoff) Messung und/oder FKW (Fluorkohlenwasserstoff) Messung erfolgt.

2. Verfahren nach Anspruch 1, **dadurch gekennzeichnet, dass** das Kältemittel und/oder Treibmittel aufweisende Gas der weiteren Quelle aus einem externen, nicht mit der Kühlgeräterecyclinganlage gekoppelten Verfahren zugeführt wird.

3. Verfahren nach Anspruch 1 und/oder 2, **dadurch gekennzeichnet, dass** das Gas der weiteren Quelle nur bei Gas liefernder erster Quelle zugeführt wird.

4. Verfahren nach Anspruch 1 und/oder 2 und/öder 3, **dadurch gekennzeichnet, dass** vor der Brennkammer (12) die Konzentration des mindestens einen Kältemittels und/oder Treibmittels in dem Kältemittel und/oder Treibmittel aufweisenden Gas in einer die Brennkammer (12) und eine Anlage (01) der Kühlgeräterecyclinganlage verbindenden Leitung (07) gemessen wird.

5. Verfahren nach Anspruch 1 und/oder 2 und/oder 3 und/oder 4, **dadurch gekennzeichnet, dass** vor der Brennkammer (12) eine Konzentration mindestens von R11 und/oder R12 und/oder R134a und/oder R141b in dem Kältemittel und/oder Treibmittel aufweisenden Gas und nach der Brennkammer (12) eine Konzentration mindestens von R11 und/oder R12 und/oder R134a und/oder R141b in dem Abgas der Brennkammer (12) gemessen werden.

6. Verfahren nach Anspruch 1 und/oder 2 und/oder 3 und/oder 4 und/oder 5, **dadurch gekennzeichnet, dass** zumindest während einer Vorwärmphase und/oder während einer Betriebsphase die Brennkammer (12) mit einem sich von dem Kältemittel und/oder Treibmittel aufweisenden Gas der ersten Quelle und sich von dem Kältemittel und/oder Treibmittel aufweisenden Gas der zweiten Quelle unterscheidenden Brennstoff auf eine vorgegebene Betriebstemperatur vorgeheizt und/oder gehalten wird.

7. Verfahren nach Anspruch 1 und/oder 2 und/oder 3 und/oder 5, **dadurch gekennzeichnet, dass** vor der Brennkammer (12) mit dem mindestens einem Sensor (26) eine Konzentration des mindestens einen Kältemittels und/oder Treibmittels in dem Kältemittel und/oder Treibmittel aufweisenden, zusammengeführten Gas der ersten Quelle und der weiteren Quelle gemessen wird.

8. Anlage zur Behandlung von Kältemittel und/oder Treibmittel aufweisenden Gasen mit mindestens einer Brennkammer (12), wobei die Brennkammer (12) mit einer ersten, Kältemittel und/oder Treibmittel aufweisendes Gas liefernden Quelle einer Kühlgeräterecyclinganlage verbunden ist, wobei vor der Brennkammer (12) mindestens ein eine Konzentration des mindestens einen Kältemittels und/oder Treibmittels in einem der Brennkammer (12) zuzuführenden Gas messender Sensor (26) angeordnet ist, wobei nach der Brennkammer (12) mindestens ein eine Konzentration des mindestens einen Kältemittels und/oder Treibmittels in einem Abgas der Brennkammer (12) messender Sensor (66) angeordnet ist, wobei die Brennkammer (12) mit einer weiteren, Kältemittel und/oder Treibmittel aufweisendes Gas liefernden Quelle verbunden ist, wobei eine Dosierung des Gases der mindestens einen weiteren Quelle über eine FCKW (Fluorchlorkohlenwasserstoff) Messung und/oder FKW (Fluorkohlenwasserstoff) Messung vorgesehen ist.

9. Anlage nach Anspruch 8, **dadurch gekennzeichnet, dass** die weitere Quelle das Kältemittel und/oder Treibmittel aufweisende Gas der weiteren Quelle aus einem externen, nicht mit der Kühlgeräterecyclinganlage gekoppelten Verfahren zuführend angeordnet ist.

10. Anlage nach Anspruch 8 und/oder 9, **dadurch gekennzeichnet, dass** an der Brennkammer (12) mindestens eine erste, Kältemittel und/oder Treibmittel aufweisendes Gas zuführende Zuführung (16) angeordnet ist, wobei die Zuführung (16) mit der ersten Quelle der Kühlgeräterecyclinganlage verbunden ist und dass die weitere Quelle vor einem der Brennkammer (12) vorgeordneten Ventilator (29) mittels mindestens einer Leitung (32) mit einer mit der Zuführung (16) der Brennkammer (12) verbundenen Leitung (07) verbunden ist.

11. Anlage nach Anspruch 8 und/oder 9 und/oder 10, **dadurch gekennzeichnet, dass** in einer die weitere Quelle mit der Brennkammer (32) verbindenden Leitung (32) mindestens ein Ventil (35) angeordnet ist und dass dieses Ventil (35) in Abhängigkeit einer vor der Brennkammer (12) mittels des mindestens einen Sensors (26) gemessenen Konzentration des Kältemittels und/oder Treibmittels des zuzuführenden Gases betätigbar und/oder betätigt ist.

12. Anlage nach Anspruch 8 und/oder 9 und/oder 10 und/oder 11, **dadurch gekennzeichnet, dass** an der Brennkammer (12) mindestens noch ein zusätzlicher einen sich von dem Kältemittel und/oder Treibmittel aufweisenden Gas der ersten Quelle und der zweiten Quelle unterscheidender Brennstoff zuführender Brenner (22) angeordnet ist.

13. Anlage nach Anspruch 8 und/oder 9 und/oder 10 und/oder 11 und/oder 12, **dadurch gekennzeichnet, dass** der Brennkammer (12) eine Quenche (46) nachgeordnet ist und dass der mindestens eine eine Konzentration mindestens eines Kältemittels und/oder Treibmittels messende Sensor (66) nach der Quenche (46) angeordnet ist.

14. Verfahren Anspruch 1 und/oder 2 und/oder 3 und/oder 4 und/oder 5 und/oder 6 und/oder 7 oder Anlage nach Anspruch 8 und/oder 9 und/oder 10 und/oder 11 und/oder 12 und/oder 13, **dadurch gekennzeichnet, dass** in der Brennkammer (12) eine oder mehrere der Reaktionen
| | | | |
|---|---|---|---|
| | R11 | CFCl₃ + 2H₂O | in CO₂+3HCl+HF |
| und/oder | R12 | CF₂Cl₂ + 2H₂O | in CO₂+2HCl+2HF |
| und/oder | R134a | C₂H₂F₄ + 2H₂O +3/2O₂ | in 2CO₂+4HF+H₂O |
| und/oder | R141b | C₂H₃FCl₂ + 2O₂ | in 2CO₂+ 2HCl+HF |
| und/oder | Cyclopentan | 2C₅H₁₀+15O₂ | in 10CO₂ +10H₂O |
stattfinden.

15. Verfahren Anspruch 1 und/oder 2 und/oder 3 und/oder 4 und/oder 5 und/oder 6 und/oder 7 und/oder 14 oder Anlage nach Anspruch 8 und/oder 9 und/oder 10 und/oder 11 und/oder 12 und/oder 13 und/oder 14, **dadurch gekennzeichnet, dass** die mindestens eine erste Quelle mit mindestens einer Zerkleinerungsvorrichtung (02) und/oder mit mindestens einer Pelletpresse (06) einer Anlage (01) der Kühlgeräterecyclinganlage verbunden ist.

## Claims

1. A method for treating gases containing refrigerant and/or propellant by means of at least one combustion chamber (12), wherein refrigerant- and/or propellant-containing gas is supplied to the combustion chamber (12) from at least one first source of a refrigeration recycling system, wherein upstream of the combustion chamber (12) a concentration of the at least one refrigerant and/or propellant is determined in the gas to be supplied to the combustion chamber (12) by means of at least one sensor (26), wherein downstream of the combustion chamber (26) a concentration of the at least one refrigerant and/or propellant in an exhaust gas of the combustion chamber (12) is determined by means of at least one sensor (66), wherein in addition to the gas from the first source the combustion chamber (12) is supplied with refrigerant- and/or propellant-containing gas from at least one additional source, wherein dosing of the gas from the at least one additional source is performed by measurement of CFC (chlorofluorocarbon) and/or HFC (hydrofluorocarbon).

2. The method according to claim 1, **characterized in that** the refrigerant- and/or propellant-containing gas from the additional source is supplied from an external process that is not coupled to the refrigeration recycling system.

3. The method according to claim 1 and/or 2, **characterized in that** the gas from the additional source is supplied only if gas is supplied by a first source.

4. The method according to claim 1 and/or 2 and/or 3, **characterized in that** upstream of the combustion chamber (12) the concentration of the at least one refrigerant and/or propellant in the refrigerant- and/or propellant-containing gas is measured in a line (07) that connects the combustion chamber (12) and a system (01) of the refrigeration recycling system.

5. The method according to claim 1 and/or 2 and/or 3 and/or 4, **characterized in that** upstream of the combustion chamber (12) a concentration of at least R11 and/or R12 and/or R134a and/or R141b in the refrigerant- and/or propellant-containing gas, and downstream of the combustion chamber (12) a concentration of at least R11 and/or R12 and/or R134a and/or R141b is measured in the exhaust air of the combustion chamber (12).

6. The method according to claim 1 and/or 2 and/or 3 and/or 4 and/or 5, **characterized in that** at least during a prewarming phase and/or during an operating phase the combustion chamber (12) is preheated to a predetermined temperature and/or maintained at said temperature by means of a fuel that is different from the refrigerant- and or propellant-containing gas from the first source and from the refrigerant- and/or propellant-containing gas from the second source.

7. The method according to Claim 1 and/or 2 and/or 3 and/or 5, **characterized in that** upstream of the combustion chamber (12) a concentration of the at least one refrigerant and/or propellant contained in the refrigerant- and/or propellant-containing gas that is combined with the gas from the first source and from the additional source is measured by means of at least one sensor (26).

8. A system for treating gases containing refrigerant and/or propellant by means of at least one combustion chamber (12), wherein the combustion chamber (12) is connected to a first source of a refrigeration recycling system, with said source supplying refrigerant- and/or propellant-containing gas, wherein upstream of the combustion chamber (12) a concentration of the at least one refrigerant and/or propellant in the gas to be supplied to the combustion chamber (12) is determined by means of at least one sensor (26), wherein downstream of the combustion chamber (12) a concentration of the at least one refrigerant and/or propellant is determined in the exhaust gas of the combustion chamber (12) by means of at least one sensor (66), wherein the combustion chamber (12) is connected to an additional source that supplies refrigerant- and/or propellant-containing gas, wherein dosing of the gas from the at least one additional source is provided by means of CFC (chlorofluorocarbon) and/or HFC (hydrofluorocarbon) measurement.

9. The system according to claim 8, **characterized in that** the additional source is arranged such that the refrigerant- and/or propellant-containing gas of the additional source is supplied by an external process that is not connected to the refrigeration recycling system.

10. The system according to claim 8 and/or 9, **characterized in that** at least one first supply means (16) supplying refrigerant- and/or propellant-containing gas is arranged on the combustion chamber (12), wherein the supply means (16) is connected to the first source of the refrigeration recycling system, and that the additional source, upstream of a ventilator (29) that is arranged upstream of the combustion chamber (12), is connected by means of at least one line (32) to a line (07) connected to the supply means (16) of the combustion chamber (12).

11. The system according to claim 8 and/or 9 and/or 10, **characterized in that** at least one valve (35) is arranged within the line (32) connecting the additional source with the combustion chamber (32) and **in that** said valve (35) is operable and/or operated relative to a concentration of the refrigerant- and/or propellant of the gas to be supplied that is measured upstream of the combustion chamber (12) by means of the at least one sensor (26).

12. The system according to claim 8 and/or 9 and/or 10 and/or 11, **characterized in that** at least one additional burner (22) is arranged at the combustion chamber (12) that supplies fuel differing from the refrigerant- and/or propellant-containing gas from the first source and from the second source.

13. The system according to Claim 8 and/or 9 and/or 10 and/or 11 and/or 12, **characterized in that** a quenching means (46) is arranged downstream of the combustion chamber (12) and that the at least one sensor (66) measuring a concentration of the at least one refrigerant and or propellant is arranged downstream of the quenching device (46).

14. A method according to claim 1 and/or 2 and/or 3 and/or 4 and/or 5 and/or 6 and/or 7 or system according to claim 8 and/or 9 and/or 10 and/or 11 and/or 12 and/or 13, **characterized in that** in the combustion chamber (12) one or a plurality of reactions occur
| | | | |
|---|---|---|---|
| | R11 | CFCl₃+ 2H₂O | in CO₂+3HCl+HF |
| and/or | R12 | CF₂Cl₂ +2H₂O | in CO₂+2HCl+2HF |
| and/or | R134a | C₂H₂F₄ +2H₂O +3/2O₂ | in 2CO₂+4HF+H₂O |
| and/or | R141b | C₂H₃FCl₂+ 2O₂ | in 2CO₂+2HCl+HF |
| and/or | | cyclopentane 2C₅H₁₀ +15O₂ | in 10CO₂+10H₂O |

15. The method according to claim 1 and/or 2 and/or 3 and/or 4 and/or 5 and/or 6 and/or 7 and/or 14 or system according to claim 8 and/or 9 and/or 10 and/or 11 and/or 12 and/or 13 and/or 14, **characterized in that** the at least one first source is connected to at least one crushing system (02) and/or with at least one pellet press (06) of a system (01) of the refrigeration recycling system.

## Revendications

1. Procédé de traitement de gaz contenant des agents frigorigènes et/ou des agents moussants au moyen d'au moins une chambre de combustion (12), où le gaz contenant des agents frigorigènes et/ou des agents moussants est conduit vers la chambre de combustion (12) depuis au moins une source d'une installation de recyclage d'appareils frigorifiques, où une concentration du ou des agents frigorigènes et/ou agents moussants dans le gaz à amener à la chambre de combustion (12) est mesurée par au moins un capteur (26) en amont de la chambre de combustion (12), où une concentration du ou des agents frigorigènes et/ou agents moussants dans un gaz d'échappement de la chambre de combustion (12) est mesurée par au moins un capteur (66) en aval de la chambre de combustion (26), où en plus du gaz de la première source, un gaz contenant des agents frigorigènes et/ou des agents moussants est amené depuis au moins une autre source vers la chambre de combustion (12), où il est procédé à un dosage du gaz de l'autre ou des autres sources par mesure de CFC (chlorofluorocarbure) et/ou de HFC (hydrofluorocarbure).

2. Procédé selon la revendication 1, **caractérisé en ce que** le gaz contenant des agents frigorigènes et/ou des agents moussants est amené à l'autre source par une technique externe non couplée à l'installation de recyclage d'appareils frigorifiques.

3. Procédé selon la revendication 1 et/ou 2, **caractérisé en ce que** le gaz de l'autre source n'est amené que si du gaz est fourni par une première source.

4. Procédé selon la revendication 1 et/ou 2 et/ou 3, **caractérisé en ce que** la concentration du ou des agents frigorigènes et/ou agents moussants dans le gaz contenant des agents frigorigènes et/ou des agents moussants est mesurée par au moins un capteur en amont de la chambre de combustion (12) dans une conduite (07) reliant la chambre de combustion (12) et une installation (01) de l'installation de recyclage d'appareils frigorifiques.

5. Procédé selon la revendication 1 et/ou 2 et/ou 3 et/ou 4, **caractérisé en ce qu'**une concentration au moins de R11 et/ou de R12 et/ou de R134a et/ou de R141b dans le gaz contenant des agents frigorigènes et/ou des agents moussants est mesurée en amont de la chambre de combustion (12), et **en ce qu'**une concentration au moins de R11 et/ou de R12 et/ou de R134a et/ou de R141b dans le gaz d'échappement de la chambre de combustion (12) est mesurée en aval de la chambre de combustion (12).

6. Procédé selon la revendication 1 et/ou 2 et/ou 3 et/ou 4 et/ou 5, **caractérisé en ce que** la chambre de combustion (12) est préchauffée et/ou maintenue à une température de service prescrite au moins pendant une phase de préchauffage et/ou pendant une phase de service, avec un combustible se distinguant du gaz contenant des agents frigorigènes et/ou des agents moussants de la première source et du gaz contenant des agents frigorigènes et/ou des agents moussants de la deuxième source.

7. Procédé selon la revendication 1 et/ou 2 et/ou 3 et/ou 5, **caractérisé en ce qu'**une concentration du ou des agents frigorigènes et/ou agents moussants dans le gaz contenant des agents frigorigènes et/ou des agents moussants amené depuis la première source et depuis l'autre source est mesurée par le ou les capteurs (26) en amont de la chambre de combustion (12).

8. Installation pour le traitement de fluides contenant des agents frigorigènes et/ou des agents moussants avec au moins une chambre de combustion (12), où la chambre de combustion (12) est reliée à une première source d'une installation de recyclage d'appareils frigorifiques fournissant du gaz contenant des agents frigorigènes et/ou des agents moussants, où au moins un capteur (26) mesurant une concentration du ou des agents frigorigènes et/ou agents moussants dans un gaz à amener à la chambre de combustion (12) est disposé en amont de la chambre de combustion (12), où au moins un capteur (66) mesurant une concentration du ou des agents frigorigènes et/ou agents moussants dans un gaz d'échappement de la chambre de combustion (12) est disposé en aval de la chambre de combustion (12), où la chambre de combustion (12) est reliée à une autre source fournissant du gaz contenant des agents frigorigènes et/ou des agents moussants, où il est prévu un dosage du gaz de l'autre ou des autres sources par mesure de CFC (chlorofluorocarbure) et/ou de HFC (hydrofluorocarbure).

9. Installation selon la revendication 8, **caractérisée en ce que** l'autre source est disposée de manière à amener le gaz contenant des agents frigorigènes et/ou des agents moussants par une technique externe non couplée à l'installation de recyclage d'appareils frigorifiques.

10. Installation selon la revendication 8 et/ou 9, **caractérisée en ce qu'**au moins une première conduite d'amenée (16) amenant le gaz contenant des agents frigorigènes et/ou des agents moussants est disposée contre la chambre de combustion (12), la conduite d'amenée (16) étant reliée à la première source de l'installation de recyclage d'appareils frigorifiques, et **en ce que** l'autre source, devant un ventilateur (29) disposé en amont de la chambre de combustion (12), est reliée par au moins une conduite (32) à une conduite (07) reliée à la conduite d'amenée (16) de la chambre de combustion (12).

11. Installation selon la revendication 8 et/ou 9 et/ou 10, **caractérisée en ce qu'**au moins une vanne (35) est disposée dans une conduite (32) reliant l'autre source à la chambre de combustion (32), et **en ce que** ladite vanne (35) est actionnée et/ou peut être actionnée en fonction d'une concentration de l'agent frigorigène et/ou de l'agent moussant du gaz à amener, mesurée par le ou les capteurs (26) en amont de la chambre de combustion (12).

12. Installation selon la revendication 8 et/ou 9 et/ou 10 et/ou 11, **caractérisée en ce qu'**au moins un brûleur (22) additionnel amenant un combustible se distinguant du gaz contenant des agents frigorigènes et/ou des agents moussants de la première source et de la deuxième source est disposé contre la chambre de combustion (12).

13. Installation selon la revendication 8 et/ou 9 et/ou 10 et/ou 11 et/ou 12, **caractérisée en ce qu'**une trempe (46) est disposée en aval de la chambre de combustion (12) et **en ce que** le ou les capteurs (66) mesurant une concentration au moins d'un agent frigorigène et/ou d'un agent moussant sont disposés en aval de la trempe (46).

14. Procédé selon la revendication 1 et/ou 2 et/ou 3 et/ou 4 et/ou 5 et/ou 6 et/ou 7 ou installation selon la revendication 8 et/ou 9 et/ou 10 et/ou 11 et/ou 12 et/ou 13, **caractérisés en ce qu'**une ou plusieurs des réactions
| | | | |
|---|---|---|---|
| | R11 | CFCl₃ + 2H₂O | en CO₂+3HCl+HF |
| et/ou | R12 | CF₂Cl₂ + 2H₂O | en CO₂+2HCl+2HF |
| et/ou | R134a | C₂H₂F₄ + 2H₂O +3/2O₂ | en 2CO₂+4HF+H₂O |
| et/ou | R141b | C₂H₃FCl₂ + 2O₂ | en 2CO₂+ 2HCl+HF |
| et/ou | cyclopentane | 2C₅H₁₀ + 15O₂ | en 10CO₂+ 10H₂O |
ont lieu dans la chambre de combustion (12).

15. Procédé selon la revendication 1 et/ou 2 et/ou 3 et/ou 4 et/ou 5 et/ou 6 et/ou 7 et/ou 14 ou installation selon la revendication 8 et/ou 9 et/ou 10 et/ou 11 et/ou 12 et/ou 13 et/ou 14, **caractérisés en ce que** la ou les premières sources sont reliées à au moins un système de broyage (02) et/ou à au moins une presse à pellets (06) d'une installation (01) de l'installation de recyclage d'appareils frigorifiques.
